(19) Europäisches Patentamt
European Patent Office
Office européen des brevets

(11) Publication number: **0 080 861**
**A1**

# (12) EUROPEAN PATENT APPLICATION

(21) Application number: 82306265.8

(22) Date of filing: 24.11.82

(51) Int. Cl.³: C 08 K 5/47
C 08 K 5/49, C 08 L 21/00

(30) Priority: 25.11.81 JP 189756/81
25.11.81 JP 189757/81
19.02.82 JP 26505/82
19.02.82 JP 26506/82

(43) Date of publication of application:
08.06.83 Bulletin 83/23

(84) Designated Contracting States:
DE FR GB IT

(71) Applicant: Sumitomo Chemical Industries Ltd.
15, Kitahama 5 chome
Higashi-ku, Osaka-shi(JP)

(72) Inventor: Yamaguchi, Tetsuo
30-333, Korigaoka-8-chome
Hirakata-shi(JP)

(72) Inventor: Maeda, Hirohumi
9-17, Sakuragaoka-4-chome
Minoo-shi(JP)

(74) Representative: Overin, Alison Diana et al,
J.A. KEMP & CO. 14, South Square Gray's Inn
London WC1R 5EU(GB)

## (54) Deodorized rubber additives.

(57) A deodorized rubber additive comprising

(1) a phosphorus-containing compound of formula

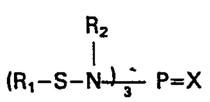

(I)

wherein $R_1$ and $R_2$ each represent an alkyl, alkenyl, cycloalkyl or aryl group and X represents an oxygen or sulfur atom; or a sulfonamide compound of formula

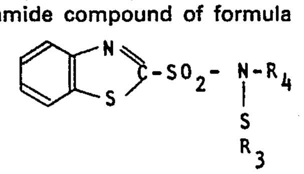

(II)

wherein $R_3$ and $R_4$ each represent an alkyl group of 1 to 12 carbon atoms, a cycloalkyl group or an aryl group, and

(2) at least one material selected from fine particle inorganic fillers for rubber compounding, amine compounds, and metal salts of fatty acids. Vulcanisation in the presence of this deodorized rubber additive as a retarder, proceeds at a favourable rate with reduced emission of odours characteristic of the phosphorus-containing compound of formula (I) and the sulfonamide of formula (II).

EP 0 080 861 A1

# DEODORIZED RUBBER ADDITIVES

This invention relates to a rubber additive and, more particularly, to a deodorized rubber additive.

With the increase in size of rubber products such as tires and belting as well as with the improvement in productive efficiency, unvulcanized rubber compounds are apt to undergo severer heat history. For this reason, demand for a more advanced retarder is very strong among concerned industrial circles.

Although the phosphorus-containing acid amides described in U.S. Patent 3,932,403 and the sulfonamides in Published Examined Japanese Patent Application No. 14,379/1982 have each an excellent retarding activity sufficient to meet the industrial requirements, yet they have specific odors originated in themselves. On the other hand, in company with the change in factory environment and the upsurge of safety and hygienic awareness, a strict regulation has recently been enforced with respect to odors of rubber compounding ingredients in the rubber industry. In view of this, the above-noted retarders present a problem yet to be solved.

The present inventors made an extensive study to deodorize the rubber additives of the phosphorus-containing type and the sulfonamide type, both of which emit specific odors and are difficult to put into

actual use in spite of their excellent retarding activities. As a result, it was found that a specified adjuvant is effective for the deodorization.

An object of this invention is to provide a deodorized rubber additive to be used as retarder.

Another object of this invention is to provide a method for the vulcanization of rubber compositions by using the deodorized rubber additive as retarder.

Other objects and advantages of this invention will become apparent from the following description.

According to this invention, there is provided a deodorized rubber additive comprising (1) a phosphorus-containing compound represented by the formula

$$(R_1-S-\overset{\overset{R_2}{|}}{N})_3\!-P=X \qquad \text{(I)}$$

wherein $R_1$ and $R_2$ represent each an alkyl, alkenyl, cycloalkyl, or aryl group and X represents an oxygen or sulfur atom, or a sulfonamide compound represented by the formula

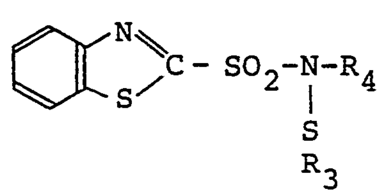

(II)

wherein $R_3$ and $R_4$ represent each an alkyl group of

1 to 12 carbon atoms, a cycloalkyl group, or an aryl group, and (2) at least one member selected from the group consisting of fine particle inorganic fillers for rubber compounding, amine compounds, and metal salts of fatty acids.

Further, according to this invention, there is provided a method of producing a vulcanized rubber, which is characterized by vulcanizing a rubber composition containing the said deodorized rubber additives, a vulcanizing agent, and a vulcanization accelerator.

The invention is described below in detail.

Examples of groups represented by $R_1$ and $R_2$ in the formula (I) are methyl, ethyl, propyl, isopropyl, butyl, isobutyl, tert-butyl, hexyl, n-octyl, tert-octyl, n-dodecyl, tert-dodecyl, and n-octadecyl among alkyl groups; propenyl, n-but-1-enyl, isobutenyl, dodecenyl, and n-octadecenyl among alkenyl group; cyclopentyl and cyclohexyl among cycloalkyl groups; and phenyl, o-, m- and p-tolyl, and naphthyl among aryl groups.

Examples of phosphorus-containing compounds represented by the formula (I), include N,N',N"-tris(isopropylthio)-N,N',N"-triphenylphosphoric triamide, N,N',N"-tris(n-butylthio)-N,N',N"-triphenylphosphoric triamide, N,N',N"-tris(cyclohexylthio)-N,N',N"-triphenylphosphoric triamide, N,N',N"-tris-(benzylthio)-N,N',N"-triphenylphosphoric triamide, N,N',N"-tris(n-octadecylthio)-N,N',N"-trimethylphosphoric triamide, N,N',N"-tris(methylthio)-N,N',N"-trimethyl-

phosphoric triamide, N,N',N"-tris(isopropylthio)-N,N',N"-tricyclohexylphosphoric triamide, N,N',N"-trimethyl-N,N',N"-tris(isopropylthio)phosphorothioic triamide, N,N',N"-tri-n-butyl-N,N',N"-tris(cyclohexylthio)phosphorothioic triamide, N,N',N"-tricyclohexyl-N,N',N"-tris(isopropylthio)phosphorothioic triamide, N,N',N"-trimethyl-N,N',N"-tris(phenylthio)phosphorothioic triamide, N,N',N"-triphenyl-N,N',N"-tri-n-butyl-N,N',N"-tris(cyclohexylthio)phosphorothioic triamide, N,N',N"-tricyclohexyl-N,N',N"-tris(isopropylthio)-phosphorothioic triamide, N,N',N"-trimethyl-N,N',N"-tris(phenylthio)phosphorothioic triamide, and N,N',N"-triphenyl-N,N',N"-tris(isopropylthio)phosphorothioic triamide.

Examples of groups represented by $R_3$ and $R_4$ in the formula (II) are methyl, ethyl, propyl, butyl, amyl, hexyl, hepthyl, octyl, nonyl, decyl, dodecyl, and isomers thereof among alkyl groups; cyclopentyl and cyclohexyl among cycloalkyl groups; and phenyl, tolyl, xylyl, and naphthyl among aryl groups.

Examples of sulfonamide compounds represented by the formula (II), include N-methylthio-N-tert-butylbenzothiazole-2-sulfonamide, N-isopropylthio-N-sec-butylbenzothiazole-2-sulfonamide, N-tert-butylthio-N-tert-butylbenzothiazole-2-sulfonamide, N-cyclohexylthio-N-tert-butylbenzothiazole-2-sulfonamide, N-phenylthio-N-tert-butylbenzothiazole-2-sulfonamide, N-xylylthio-N-tert-butylbenzothiazole-2-sulfonamide,

N-isopropylthio-N-cyclohexylbenzothiazole-2-sulfonamide, N-sec-butyl-N-cyclohexylbenzothiazole-2-sulfonamide, N-tert-octylthio-N-cyclohexylbenzothiazole-2-sulfonamide, N-decylthio-N-cyclohexylbenzothiazole-2-sulfonamide, N-isopropyl-N-phenylbenzothiazole-2-sulfonamide, N-tert-butylthio-N-phenylbenzothiazole-2-sulfonamide, N-tert-octyl-N-phenylbenzothiazole-2-sulfonamide, N-dodecylthio-N-phenylbenzothiazole-2-sulfonamide, N-cyclohexyl-N-phenylbenzothiazole-2-sulfonamide, and N-phenylthio-N-phenylbenzothiazole-2-sulfonamide.

The amine compounds used in this invention include aliphatic amines, alicyclic amines, aromatic amines, and alkanolamines. Examples of these amines are trimethylamine, diethylamine, triethylamine, monopropylamine, dipropylamine, tripropylamine, monobutylamine, dibutylamine, tributylamine, monooctylamine, dioctylamine, trioctylamine, monostearylamine, distearylamine, tristearylamine, and isomers thereof among aliphatic amines; monocyclohexylamine, dicyclohexylamine, mono(dimethylcyclohexyl)amine, and isomers thereof among alicyclic amines; aniline, diphenylamine, toluidine, xylidine, and isomers thereof among aromatic amines; and trimethanolamine, monoethanolamine, diethanolamine, triethanolamine, monopropanolamine, dipropanolamine, tripropanolamine, monobutanolamine, dibutanolamine, tributanolamine, and isomers thereof among alkanolamines. Of these amine compounds,

alkanolamines are preferred.

Examples of fine particle inorganic fillers for rubber compounding used in this invention, include silica, clay, calcium carbonate, titanium oxide, talc, and diatomaceous earth, which are 10 μ or less, preferably 1 μ or less, more preferably 0.1 μ or less in an average particle size. Of these fillers, preferable are calcium carbonate, clay, talc and diatomaceous earth, which are 1 μ or less, preferably 0.1 μ or less in the particle size. More preferable is calcium carbonate of 0.1 μ or less in the particle size, particularly that treated with an organic acid.

Examples of fatty acid components of the metal salts used in this invention, include caprylic acid, pelargonic acid, capric acid, undecylic acid, lauric acid, tridecylic acid, myristic acid, pentadecylic acid, palmitic acid, margaric acid, stearic acid, oleic acid, nonadecylic acid, and arachic acid. Of these acids, particularly preferred are stearic acid and oleic acid. The metal components of the metal salts of fatty acids are, for example, zinc, copper, and iron. Of these, zinc is most preferred.

The amine compounds may be used generally in an amount of 0.1 to 20 parts by weight based on 100 parts by weight of the phosphorus-containing compound (formula I) or the sulfonamide compound (formula II). If the amount of the amine is below 0.1 part by weight, the deodorizing effect is insufficient, whereas if

it exceeds 20 parts by weight, the vulcanization retarding activity of the phosphorus-containing compound or the sulfonamide compound tends to decline. The fine particle inorganic fillers for rubber compounding may be used in an amount of 50 parts by weight or more, generally 50 to 2,000 parts by weight, based on 100 parts by weight of the phosphorus-containing compound or the sulfonamide compound.

The fatty acid metal salts may be used in an amount of 5 to 300 parts by weight based on 100 parts by weight of the phosphorus-containing compound (formula I) or the sulfonamide compound (formula II).

The mixing of the phosphorus-containing compound or the sulfonamide compound and at least one adjuvant selected from fine particle inorganic fillers for rubber compounding, amine compounds, and metal salts of fatty acids can be carried out by any of the customary methods. For instance, one or more of the above adjuvants are thoroughly mixed with a solution of the phosphorus-containing compound (formula I) or the sulfonamide compound (formula II) in a suitable solvent, and the solvent is then removed by distillation or other means to yield a uniform mixture. The mixing may also be performed by means of a mechanical mixer to produce a uniform mixture.

The rubber additive of this invention thus prepared is substantially deodorized without deterioration in essential properties of phosphorus-containing

compounds (formula I) or sulfonamide compounds (formula II) and is used advantageously in the vulcanization of rubber without any accompanied odor problem.

The rubbers used in this invention are natural rubber and synthetic rubbers such as cis-polybutadiene, butyl rubber, ethylene-propylene terpolymer, polymers of 1,3-butadienes such as isoprene and chloroprene and copolymers of 1,3-butadiene with other monomers such as styrene, acrylonitrile and isobutylene.

According to this invention, the vulcanizate of these rubbers is produced in the following way: A vulcanizable rubber composition is prepared by blending 100 parts by weight of a rubber with 0.01 to 5 parts by weight of the present deodorized rubber additive and suitable amounts of a vulcanizing agent (e.g. sulfur), a vulcanization accelerator (e.g. N-cyclohexyl-2-benzothiazylsulfenamide, N-t-butyl-2-benzothiazylsulfenamide, 2-mercaptobenzothiazole, dibenzothiazyldisulfenamide, tetramethylthiuram disulfide), and conventional rubber adjuvants (e.g. stearic acid, zinc oxide). The resulting rubber composition is vulcanized in a customary manner, for example, at 130° to 200°C, for 0.1 to 5 hours. When the vulcanization is carried out according to this invention, the specific odor characteristic of the phosphorus-containing compound (formula I) or the sulfonamide compound (formula II) is greatly reduced so that

the working environment is not adversely affected, and the vulcanization proceeds at a favorable rate until completion.

The invention is illustrated below with reference to Examples, but the invention is not limited thereto.

Example 1

Run No. 1.

Into 50 g of acetone, was dissolved 10 g of N,N',N"-tris(isopropylthio)-N,N',N"-triphenylphosphoric triamide, used as the phosphorus-containing compound. After addition of 1 g of triisopropanolamine and thorough mixing, the solution was freed from the acetone by distillation under reduced pressure in a customary manner. Each 10 g of the above phosphorus-containing compound before and after addition of the triisopropanolamine were placed respectively in tightly closed polyethylene bottles of 100 ml in volume. After the bottle had been left standing for 30 minutes at 40°C, the air in the bottle was transferred by means of a syringe into a polyethylene bag provided with a slide fastener, and progressively diluted with purified air. The dilution ratio at which the odor became undetectable was referred to as "odor index".

Run Nos. 2-6 and Comparative Example.

Similar tests were run by using each 10 g of various phosphor-containing compounds and varied

amounts of various amines as shown in Table 1, in which are also shown the odor indices.

Table 1

| Run No. | Phosphorus-containing compound | Amine compound: Name | Amine compound: Amount (g) | Odor Index |
|---|---|---|---|---|
| 2 | N,N',N"-tris(isopropylthio)N,N',N"-triphenylphosphoric triamide | Triisopropanolamine | 0.5 | 8 |
| 3 | " | Mono-octylamine | 2 | 125 |
| 4 | N,N',N"-tris(cyclohexylthio)-N,N',N"-triphenylphosphoric triamide | Diethanolamine | 1 | 11 |
| 5 | " | Toluidine | 1 | 180 |
| 6 | N,N',N"-tricyclohexyl-N,N',N"-tris(isopropylthio)phosphorothioic triamide | Cyclohexylamine | 1 | 165 |
| Comparative Example | N,N',N"-tris(isopropylthio)-N,N',N"-triphenylphosphoric triamide | - | - | 350 |
| | N,N',N"-tris(cyclohexylthio)-N,N',N"-triphenylphosphoric triamide | - | - | 295 |
| | N,N',N"-tricyclohexyl-N,N',N"-tris-(isopropylthio)phosphorothioic triamide | - | - | 435 |

Example 2

Run No. 1.

A mixture was prepared by mixing 100 g of N,N',N"-tris(isopropylthio)-N,N',N"-triphenylphosphoric triamide, used as the phosphorus-containing compound, and 200 g of "Neolite S" (calcium carbonate treated with a fatty acid, 0.04 μ in average particle size, produced by Takehara Chemical Co.) in a bench mixer (type 5 DM of Shinagawa Kōgyōsho Co.) at 500 rpm for 10 minutes.

The above phosphorus-containing compound (10 g) and the above mixture (30 g) were placed respectively in tightly closed polyethylene bottles of 100 ml in volume. After the bottle had been left standing for 30 minutes at 40°C, the air in the bottle was withdrawn by means of a syringe and progressively diluted with purified air. The dilution ratio at which the odor became undetectable was referred to as "odor index".

Run Nos. 2-6 and Comparative Example.

Similar tests were run by using other phosphorus-containing compounds and other inorganic fillers for rubber compounding as shown in Table 2. In the odor test, the quantity of phosphorus-containing compound in the bottle was 10 g in each case.

Table 2

| Run No. | Phosphorus-containing compound *1 | Inorganic filler (average particle size in parenthesis) | | Odor index |
|---|---|---|---|---|
| | | Name | Amount (g) | |
| 2 | N,N',N"-tris(isopropylthio)-N,N',N"-triphenylphosphoric triamide | "Neolite S" (0.04 μ) | 200 | 4 |
| 3 | " | "Hakuenka O" *2 (0.03 μ) | 50 | 6 |
| 4 | N,N',N"-tris(cyclohexylthio)-N,N',N"-triphenylphosphoric triamide | "Snowlite SSS" *3 (2.22 μ) | 500 | 140 |
| 5 | " | "LPG" *4 (0.30 μ) | 200 | 100 |
| 6 | N,N',N"-tricyclohexyl-N,N',N"-tris-(isopropylthio)phosphorothioic triamide | "Carplex #1120" *5 (0.02 μ) | 1000 | 185 |
| Comparative Example | N,N',N"-tris(isopropylthio)-N,N',N"-triphenylphosphoric triamide | - | - | 350 |
| | N,N',N"-tris(cyclohexylthio)-N,N',N"-triphenylphosphoric triamide | - | - | 295 |
| | N,N',N"-tricyclohexyl-N,N',N"-tris(iso-propylthio)phosphorothioic triamide | - | - | 435 |

Note:

*1 Amount of the charge of phosphorus-containing compound: 100 g

*2 Calcium carbonate treated with resin acid (Shiraishi Kōgyō Co.)

*3 Calcium carbonate treated with a fatty acid (Maruo Calcium Co.)

*4 Hard clay (Huber Co.)

*5 Silica (Shionogi Co.)

Example 3

Run No. 1.

To a solution of 10 g of N,N',N"-tris(isopropylthio)-N,N',N"-triphenylphosphoric triamide, used as the phosphorus-containing compound, in 50 g of acetone, was added 1 g of zinc stearate. After having been uniformly mixed, the mixture was freed from the acetone by distillation under reduced pressure in a customary manner. Each 10 g of the above phosphorus-containing compound before and after addition of the zinc stearate were placed respectively in tightly closed polyethylene bottles of 100 ml in volume. After the bottle had been left standing at 40°C for 30 minutes, the air in the bottle was transferred by means of a syringe into a polyethylene bag provided with a slide fastener, and progressively diluted with purified air. The dilution ratio at which the odor became no longer detectable was referred to as "odor index".

Run Nos. 2-6 and Comparative Example.

Similar tests were run by using each 10 g of various phosphorus-containing compounds and varied amounts of various metal salts of fatty acids as shown in Table 3. The odor indices were as shown in the same Table.

Table 3

| Run No. | Phosphorus-containing compound | Fatty acid metal salt | | Odor index |
|---|---|---|---|---|
| | | Name | Amount (g) | |
| 2 | N,N',N"-tris(isopropylthio)-N,N',N"-triphenylphosphoric triamide | Zinc stearate | 1 | 105 |
| 3 | " | " | 80 | 14 |
| 4 | N,N',N"-tris(cyclohexylthio)-N,N',N"-triphenylphosphoric triamide | Zinc oleate | 10 | 15 |
| 5 | " | Copper tridecylate | 10 | 28 |
| 6 | N,N',N"-tricyclohexyl-N,N',N"-tris-(isopropylthio)phosphorothioic triamide | Zinc nonadecylate | 10 | 29 |
| Comparative Example | N,N',N"-tris(isopropylthio)-N,N',N"-triphenylphosphoric triamide | - | - | 350 |
| | N,N',N"-tris(cyclohexylthio)-N,N',N"-triphenylphosphoric triamide | - | - | 295 |
| | N,N',N"-tricyclohexyl-N,N',N"-tris-(isopropylthio)phosphorothioic triamide | - | - | 435 |

Example 4

Run No. 1

To a solution of 10 g of N-isopropylthio-N-cyclohexylbenzothiazole-2-sulfonamide, used as the sulfonamide compound, in 50 g of acetone, was added 1 g of triisopropanolamine. After having been uniformly mixed, the mixture was freed from the acetone by distillation under reduced pressure in a customary manner. Each 10 g of the above sulfonamide compound before and after addition of the triisopropanolamine were placed respectively in tightly closed polyethylene bottles of 100 ml in volume. After the bottle had been left standing at 40°C for 30 minutes, the air in the bottle was transferred by means of a syringe into a polyethylene bag provided with a slide fastener, and progressively diluted with purified air. The dilution ratio at which the odor became no longer detectable was referred to as "odor index".

Run Nos. 2-6 and Comparative Example.

Similar tests were performed by using each 10 g of various sulfonamide compounds and varied amounts of various amine compounds as shown in Table 4. The odor indices were as shown in the same Table.

Table 4

| Run No. | Sulfonamide compound | Amine compound | | Odor index |
|---|---|---|---|---|
| | | Name | Amount (g) | |
| 2 | N-isopropylthio-N-cyclohexylbenzo-thiazole-2-sulfonamide | Triisopropanol-amine | 0.5 | 19 |
| 3 | " | Monooctyl-amine | 2 | 130 |
| 4 | N-cyclohexylthio-N-tert-butylbenzo-thiazole-2-sulfonamide | Diethanol-amine | 1 | 23 |
| 5 | " | Toluidine | 1 | 210 |
| 6 | N-phenylthio-N-phenylbenzo-thiazole-2-sulfonamide | Cyclohexyl-amine | 1 | 195 |
| Comparative Example | N-isopropylthio-N-cyclohexylbenzo-thiazole-2-sulfonamide | - | - | 520 |
| | N-cyclohexylthio-N-tert-butyl-benzothiazole-2-sulfonamide | - | - | 315 |
| | N-phenylthio-N-phenylbenzo-thiazole-2-sulfonamide | - | - | 340 |

Example 5

Run No. 1.

A mixture was prepared by mixing 100 g of N-isopropylthio-N-cyclohexylbenzothiazole-2-sulfonamide, used as the sulfonamide compound, and 200 g of "Neolite S" (calcium carbonate treated with fatty acid, 0.04 μ in average particle size, produced by Takehara Chemical Co.) in a bench mixer (type 5 DM of Shinagawa Kōgyōsho Co.) at 500 rpm for 10 minutes.

The above sulfonamide compound (10 g) and the above mixture (30 g) were placed respectively in tightly closed polyethylene bottles of 100 ml in volume. After the bottle had been left standing at 40°C for 30 minutes, the air in the bottle was withdrawn by means of a syringe and progressively diluted with purified air. The dilution ratio at which the odor became no longer detectable was referred to as "odor index".

Run Nos. 2-6 and Comparative Example.

Similar tests were performed by using other sulfonamide compounds and other finely subdivided inorganic fillers for rubber compounding as shown in Table 5. In the odor test, the quantity of sulfonamide compound in the bottle was 10 g in each case.

Table 5

| Run No. | Sulfonamide compound*1 | Inorganic filler (average particle size in parenthesis) | | Odor index |
|---|---|---|---|---|
| | | Name | Amount (g) | |
| 2 | N-isopropylthio-N-cyclohexylbenzothiazole-2-sulfonamide | "Neolite S" (0.04 μ) | 200 | 12 |
| 3 | " | "Hakuenka O"*2 (0.03 μ) | 50 | 8 |
| 4 | N-cyclohexylthio-N-tert-butylbenzothiazole-2-sulfonamide | "Snowlite SSS"*3 (2.22 μ) | 500 | 155 |
| 5 | " | LGB*4 (0.30 μ) | 200 | 98 |
| 6 | N-phenylthio-N-phenylbenzothiazole-2-sulfonamide | "Carplex #1120"*5 (0.02 μ) | 1000 | 110 |
| Comparative Example | N-isopropylthio-N-cyclohexylbenzothiazole-2-sulfonamide | - | - | 520 |
| | N-cyclohexylthio-N-tert-butylbenzothiazole-2-sulfonamide | - | - | 315 |
| | N-phenylthio-N-phenylbenzothiazole-2-sulfonamide | - | - | 340 |

Note:

*1 Amount of charge of sulfonamide compound: 100 g

*2 Calcium carbonate treated with resin acid (Shiraishi Kōgyō Co.)

*3 Calcium carbonate treated with a fatty acid (Maruo Calcium Co.)

*4 Hard clay (Huber Co.)

*5 Silica (Shionogi Co.)

Example 6

Run No. 1

To a solution of 10 g of N-isopropylthio-N-cyclohexylbenzothiazole-2-sulfonamide, used as the sulfonamide compound, in 50 g of acetone, was added 1 g of zinc stearate. After having been uniformly mixed, the mixture was freed from the acetone by distillation under reduced pressure in a customary manner. Each 10 g of the above sulfonamide compound before and after addition of the zinc stearate were placed respectively in tightly closed polyethylene bottles of 100 ml in volume. After the bottle had been left standing at 40°C for 30 minutes, the air in the bottle was transferred by means of a syringe into a polyethylene bag provided with a slide fastener, and progressively diluted with purified air. The dilution ratio at which the odor became no more detectable was referred to as "odor index".

1 Run Nos. 2-6 and Comparative Example.

Similar tests were run by using each 10 g of other sulfonamide compounds and varied amounts of various metal salts of fatty acids as shown in Table 6. The odor indices were also shown in Table 6.

Table 6

| Run No. | Sulfonamide compound | Metal salt of fatty acid | | Odor index |
|---|---|---|---|---|
| | | Name | Amount (g) | |
| 2 | N-isopropylthio-N-cyclohexylbenzothiazole-2-sulfonamide | Zinc stearate | 1 | 170 |
| 3 | " | " | 80 | 21 |
| 4 | N-cyclohexylthio-N-tert-butylbenzothiazole-2-sulfonamide | Zinc oleate | 10 | 27 |
| 5 | " | Copper tridecylate | 10 | 41 |
| 6 | N-phenylthio-N-phenylbenzothiazole-2-sulfonamide | Zinc nonadecylate | 10 | 48 |
| Comparative Example | N-isopropylthio-N-cyclohexylbenzothiazole-2-sulfonamide | - | - | 520 |
| | N-cyclohexylthio-N-tert-butylbenzothiazole-2-sulfonamide | - | - | 315 |
| | N-phenylthio-N-phenylbenzothiazole-2-sulfonamide | - | - | 340 |

Example 7

Deodorized rubber additives obtained in each Run No. 1 of Examples 1 to 6 were used for rubber vulcanization as a retarder as follows.

Natural rubber (80 parts by weight) and SBR #1500 (20 parts by weight) were pre-kneaded at 120°C to 130°C for 1 minute in Banbury mixer. HAF Black (45 parts by weight), stearic acid (3 parts by weight), softener (3 parts by weight), sulfur (2.5 parts), zinc white (5 parts by weight), N-phenyl-N'-isopropyl-p-phenylenediamine (antioxidant, 2 parts by weight) and the deodorized rubber additive (the amount being shown in Table 7) were added into the mixer. After kneading for 2 minutes, the resulting mixture was taken out of the mixer and then mixed with N-cyclohexyl-benzothiazolsulfenamide (vulcanization accelerator, 1 part by weight) using an open roll mixer (surface temperature 60° to 70°C).

The resulting vulcanizable-rubber composition was examined for Mooney scorch time and vulcanization behaviors, according to JIS K-6300 and ASTM-D-2084, respectively. The vulcanization was carried out at 145°C for 30 minutes on a vulcanization press. The vulcanizate obtained was subjected to tensile test according to JIS K-6301. The results are as shown in Table 7.

Table 7

| Deodorized rubber additive (Retarder) | | Physical properties of rubber | | |
|---|---|---|---|---|
| Kind | Amount (pasts by weight based on 100 parts by weight of rubber) | Mooney scorch time ($ML_5$: min.) | Optimum cure time ($T_{90}$: min.) | Modulus ($M_{300}$: $kg/cm^2$) |
| N,N',N"-tris(isopropylthio)-N,N',N"-triphenylphosphoric triamide | 0.1 | 16.1 | 13.0 | 125 |
| Additive of Example 1 | 0.11 | 16.0 | 12.9 | 126 |
| Additive of Example 2 | 0.30 | 16.2 | 13.1 | 126 |
| Additive of Example 3 | 0.11 | 16.0 | 13.3 | 124 |
| N-isopropylthio-N-cyclohexylbenzothiazol-2-sulfenamide | 0.10 | 12.2 | 11.4 | 132 |
| Additive of Example 4 | 0.11 | 12.0 | 11.5 | 133 |
| Additive of Example 5 | 0.30 | 12.5 | 11.2 | 131 |
| Additive of Example 6 | 0.11 | 12.1 | 11.3 | 135 |

# C L A I M S

1. A deodorized rubber additive comprising

(1) a phosphorus-containing compound of formula

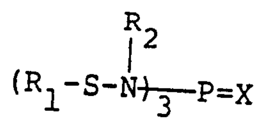

(I)

wherein each of $R_1$ and $R_2$ independently represents an alkyl, alkenyl, cycloalkyl or aryl group and X represents an oxygen or sulfur atom; or a sulfonamide compound of formula

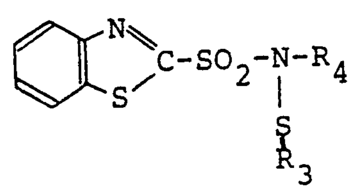

(II)

wherein each of $R_3$ and $R_4$ independently represents an alkyl group of 1 to 12 carbon atoms, a cycloalkyl group, or an aryl group , and

(2) at least one material selected from fine particle inorganic fillers for rubber

compounding, amine compounds and metal salts of fatty acids.

2. A deodorized rubber additive according to claim 1, containing a fine particle inorganic filler for rubber compounding which is silica, clay, calcium carbonate, titanium oxide, talc or diatomaceous earth.

3. A deodorized rubber additive according to claim 1 or 2 containing an amine compound which is an aliphatic amine, an alicyclic amine, an aromatic amine or an alkanolamine.

4. A deodorized rubber additive according to claim 1, 2 or 3 containing a metal salt of a fatty acid which is a zinc, copper or iron salt of caprylic acid, pelargonic acid, capric acid, undecylic acid, lauric acid, tridecylic acid, myristic acid, pentadecylic acid, palmitic acid, margaric acid, stearic acid, oleic acid, nonadecylic acid, or arachic acid.

5. A deodorized rubber additive according to any one of the preceding claims containing a fine particle inorganic filler for rubber compounding in an amount of 50 to 2000 parts by weight based on 100 parts by weight of the phosphorus-containing compound of formula (I) or the sulfonamide compound

of formula (II).

6. A deodorized rubber additive according to any one of the preceding claims containing an amine compound in an amount of 0.1 to 20 parts by weight based on 100 parts by weight of the phosphorus-containing compound of formula (I) or the sulfonamide compound of formula (II).

7. A deodorized rubber additive according to any one of the preceding claims containing a metal salt of a fatty acid in an amount of 5 to 300 parts by weight based on 100 parts by weight of the phosphorus-containing compound of the formula (I) or the sulfonamide compound of the formula (II).

8. A method of producing a rubber vulcanisate, which comprises vulcanizing a rubber composition comprising a rubber and a deodorized rubber additive as claimed in any one of the preceding claims.

9. A method according to claim 8, wherein the deodorized rubber additive is used in an amount of 0.01 - 5 parts by weight based on 100 parts by weight based on 100 parts by weight of the rubber.

European Patent Office

# EUROPEAN SEARCH REPORT

Application number

EP 82 30 6265

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,D | US-A-3 932 403 (S.ASHTON et al.) *Claims; example 5* | 1,2,5, 8,9 | C 08 K 5/47<br>C 08 K 5/49<br>C 08 L 21/00 |
| A | US-A-3 933 907 (S.ASHTON et al.) *Claims* | 1 | |
| P | GB-A-2 086 370 (SANSHIN KAGAKU KOGYO) *Claims 1,15; page 20, table 22* | 1,7,8, 9 | |

TECHNICAL FIELDS SEARCHED (Int. Cl. 3)

C 08 K
C 08 L

The present search report has been drawn up for all claims

| Place of search | Date of completion of the search | Examiner |
|---|---|---|
| THE HAGUE | 02-03-1983 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document